Europäisches Patentamt

European Patent Office

Office européen des brevets

(11) Veröffentlichungsnummer: **0 276 361 B1**

# (12) EUROPÄISCHE PATENTSCHRIFT

(45) Veröffentlichungstag der Patentschrift: **11.12.91**

(51) Int. Cl.⁵: **G21C 7/16**

(21) Anmeldenummer: **87111862.6**

(22) Anmeldetag: **17.08.87**

(54) **Anlage mit einem nuklearen Reaktor, insbesondere Heizreaktor.**

(30) Priorität: **15.01.87 CH 123/87**

(43) Veröffentlichungstag der Anmeldung:
**03.08.88 Patentblatt 88/31**

(45) Bekanntmachung des Hinweises auf die
Patenterteilung:
**11.12.91 Patentblatt 91/50**

(84) Benannte Vertragsstaaten:
**AT BE DE FR GB NL SE**

(56) Entgegenhaltungen:
**EP-A- 0 204 096**
**DE-A- 1 900 410**
**DE-A- 3 506 334**
**FR-A- 2 092 135**
**US-A- 3 020 888**

(73) Patentinhaber: **GEBRÜDER SULZER AKTIENGE-**
**SELLSCHAFT**
**Zürcherstrasse 9**
**CH-8401 Winterthur(CH)**

(72) Erfinder: **Straub, Hermann**
**Seuzacherstrasse 62**
**CH-8400 Winterthur(CH)**

## Beschreibung

Die Erfindung betrifft eine einen nuklearen Reaktor aufweisende Anlage mit den Merkmalen des Oberbegriffs des Anspruchs 1.

Eine solche Anlage ist aus der DE-OS 35 06 334 bekannt, wobei die erste Drosselstelle durch an der Führungsstange einerseits und am Steuerstab andererseits vorgesehene, jeweils in den ersten Ringraum ragende ringförmige Rippen gebildet wird. Die an der Führungsstange vorgesehenen Rippen verteilen sich über die ganze Länge der Führungsstange, wogegen eine wesentlich kleinere Anzahl Rippen am Steuerstab sich nahe an dessen unterem Ende befindet. Mit Hilfe des den ersten Druckraum und die erste Drosselstelle durchströmenden Kühlmittels wird in diesem Raum ein Druck aufrechterhalten, der den zugehörigen Steuerstab in einer bestimmten Lage hält, die bei konstanter Kühlmittelförderung im wesentlichen konstant ist. Durch Aendern der Kühlmitteldurchflussmenge lässt sich der Druck im ersten Druckraum verändern, wodurch sich der Steuerstab um mindestens einen Abstand zwischen zwei seiner Rippen in vertikaler Richtung relativ zur Führungsstange verschiebt und bei konstant bleibendem Druck eine neue Lage einnimmt. Auf diese Weise lässt sich durch Verschieben der Steuerstäbe die Leistungsabgabe des Reaktors relativ grob beeinflussen, was durch den Rippenabstand bedingt ist. Vorteilhaft bei der bekannten Anlage ist, dass beim Verschieben der Steuerstäbe auf den Führungsstangen keine nennenswerte Reibung auftritt und dass bei einem Wegfall der Kühlmittelströmung und damit des die Steuerstäbe tragenden Druckes die Steuerstäbe selbsttätig in ihre unterste Sicherheitsstellung zurückgehen, in der die Absorberstäbe die Brennelemente voneinander abschirmen, so dass die nukleare Reaktion unterbrochen ist. Bei der bekannten Anlage gelingt es jedoch nicht, mit hinreichender Genauigkeit die jeweilige Lage der Steuerstäbe stabil zu halten.

Der Erfindung liegt die Aufgabe zugrunde, in einer Anlage der eingangs genannten Art eine Anordnung zu finden, mit der - unter Beibehaltung der Vorteile der sehr geringen Reibung und des selbsttätigen Zurückgehens in die Sicherheitsstellung - eine bessere Lagestabilität der Steuerstäbe möglich ist.

Diese Aufgabe wird erfindungsgemäss durch die Merkmale des Kennzeichens des Anspruchs 1 gelöst.

Durch das Vorsehen der zweiten Drosselstelle, die mit der ersten Drosselstelle in Wechselwirkung steht, erhalten die Steuerstäbe eine grössere Lagestabilität gegen schwache Druckänderungen des Kühlmittelstromes, da die beiden Drosselstellen das Ein- und das Ausströmen von Kühlmedium in bzw. aus dem jeweiligen zweiten Druckraum erschweren, wodurch eine beachtliche Bremswirkung auf die Steuerstäbe ausgeübt wird, die einer Verschiebung dieser Stäbe entgegenwirkt. Die Lagestabilität der Steuerstäbe ist besonders gross, wenn als Kühlmedium ein inkompressibles Medium, z.B. Wasser, verwendet wird, was meistens der Fall ist. Mit Hilfe der Steuermittel ist es aber möglich, die beschriebene stabilisierende Wirkung zu überwinden und die Steuerstäbe stufenweise nach oben durch positive Druckstösse (= sprunghafte Druckzunahme) oder nach unten durch negative Druckstösse (= sprunghafte Druckabnahme) zu bewegen. Versuche mit einem Steuerstab von 42 mm Durchmesser und 1 m Länge sowie einem Gewicht von etwa 20 kg inklusive den Absorberstäben, wobei Wasser als Kühlmedium verwendet wurde, haben gezeigt, dass selbst Druckschwankungen von 0,6 bar ober- und unterhalb des Solldruckes im ersten Druckraum zu keiner nennenswerten Bewegung der Steuerstäbe führen und dass positive oder negative Druckstösse in der Grössenordnung von 1 bis 2 bar notwendig sind, um die Steuerstäbe stufenweise nach oben bzw. nach unten zu verschieben. In der erfindungs gemässen Anlage sind ohne Schwierigkeiten Verschiebungsstufen von 10 mm verwirklicht worden.

Die Gestaltung der Drosselstellen gemäss Anspruch 2 ist sowohl herstellungs- wie funktionsmässig vorteilhaft. Durch entsprechende Formgebung und Bemessung der Rippen bzw. der Druckstösse ist es möglich, das Verhalten der Steuerstäbe bei Einhaltung von sehr kleinen Verschiebungsstufen praktisch nach Wunsch zu bestimmten.

Anspruch 3 charakterisiert einen bevorzugten Abstand der Rippen, der sich als besonders günstig erwiesen hat.

Durch die Auslegung gemäss Anspruch 4 wird die Lagestabilität der Steuerstäbe zusätzlich verbessert.

Durch die Drucküberwachungsvorrichtung gemäss Anspruch 5 wird sichergestellt, dass z.B. bei einer Druckstörung die Steuerstäbe in die Sicherheitsstellung gelangen.

Durch die Koppelung der Drucküberwachungsvorrichtung mit den Steuermitteln gemäss Anspruch 6 wird verhindert, dass die Funktion dieser Steuermittel von jener Vorrichtung gestört wird.

Die Weiterbildung der Anlage nach Anspruch 7 ermöglicht eine zuverlässige und ausgesprochen einfache Feststellung der Höhenlage der Steuerstäbe, ohne dass dafür zusätzliche Geräte im Innern des Druckbehälters untergebracht werden müssten.

Zwei Ausführungsbeispiele der Erfindung und weitere Vorteile werden in der folgenden Beschreibung anhand der Zeichnung näher erläutert. Es zeigen:

Fig. 1

einen Längsschnitt durch eine Führungsstange und einen Steuerstab zusammen mit schematisch dargestellten Förder- und Steuermitteln sowie einer Drucküberwachungsvorrichtung,

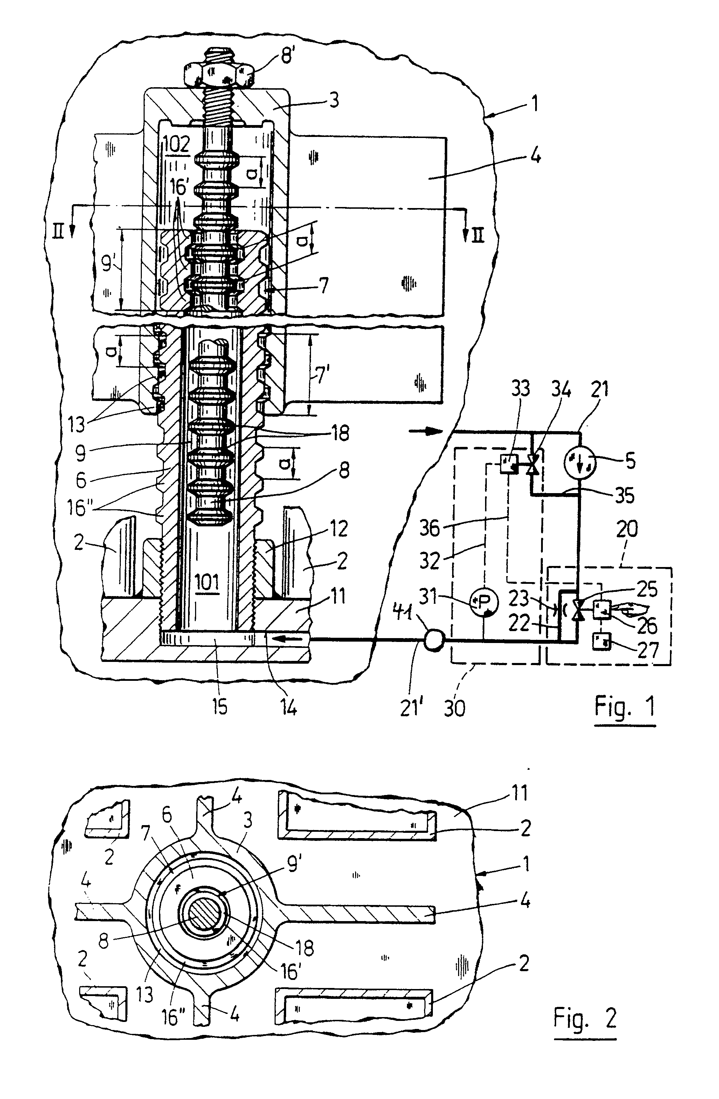

Fig. 2
einen Schnitt gemäss II-II in Fig.1,

Fig. 3a bis 3e
je einen Ausschnitt aus Fig. 1 bei verschiedenen Phasen einer Verschiebung des Steuerstabes um eine Stufe nach oben,

Fig. 4
einen der Fig. 1 entsprechenden Längsschnitt einer abgewandelten Ausführungsform und

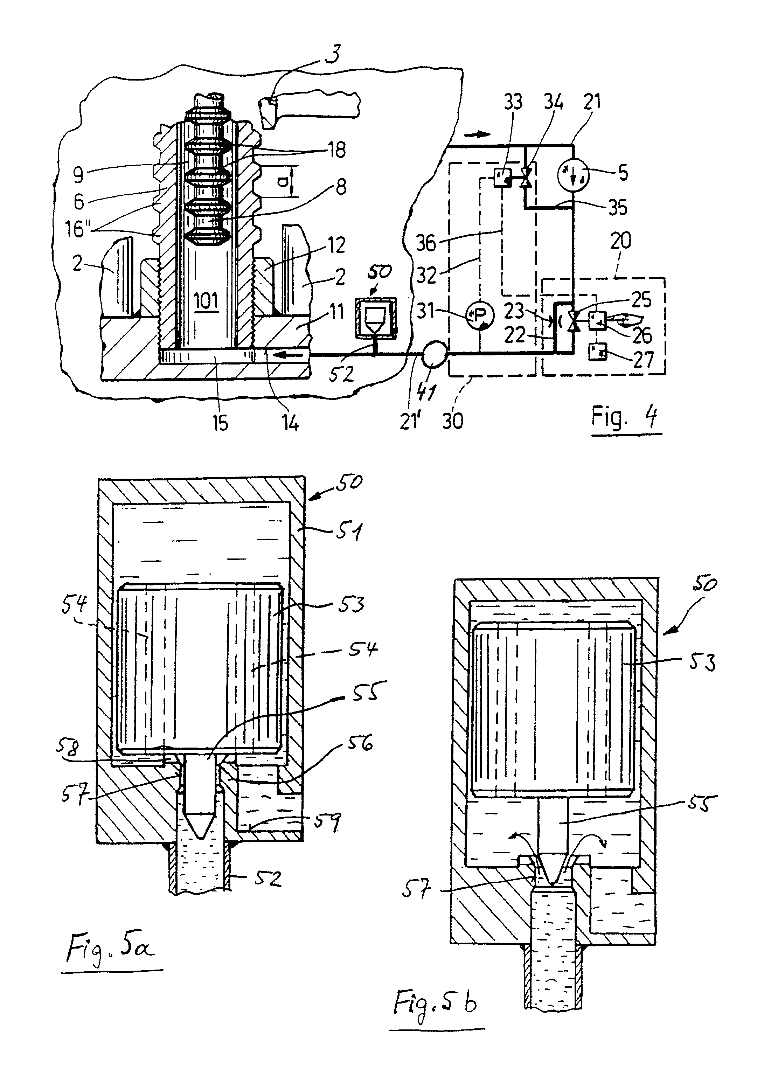

Fig. 5a und 5b
ein Detail aus Fig. 4 in verschiedenen Betriebsstellungen.

Gemäss Fig. 1 und 2 weist eine Anlage mit einem Heizreaktor ein Druckgefäss 1 auf, von dem nur ein Ausschnitt gezeigt ist. Im Druckgefäss 1 sind Wasser als Kühlmedium sowie ein Reaktorkern enthalten, der im wesentlichen aus geraden, vertikalen, kanalartigen, Spaltmaterial enthaltenden Brennelementen 2 und dazwischen angeordneten, vertikal bewegbaren Steuerstäben 3 besteht, an denen Absorberstäbe 4 befestigt sind. Jeder rohrförmige Steuerstab 3 umgibt unter Freilassung eines ersten spaltförmigen Ringraumes 7 eine ebenfalls rohrförmige, relativ zu den Brennelementen unbewegliche Führungsstange 6. Die Führungsstangen 6 sind in je eine vertikale Bohrung einer Kerntragplatte 11 eingeschraubt und münden jeweils in eine darin enthaltene Druckkammer 15. Zur besseren Abstützung der Führungsstangen 6 sind die vertikalen Bohrungen der Tragplatte 11 mit Hilfe von Hülsen 12 nach oben verlängert. Eine an das Innere des Druckgefässes 1 angeschlossene Hauptsteuerleitung 21 weist eine als Kühlmittelfördermittel dienende Pumpe 5 auf und ist druckseitig über einen Verteiler 41, von dem soviele Steuerleitungen 21′ abgehen wie Steuerstäbe vorhanden sind, mit in der Kerntragplatte 11 angebrachten Kanälen 14 verbunden, die in die Druckkammern 15 münden. Das obere Ende jedes Steuerstabes 3 ist geschlossen und trägt je eine mit ihm verschraubte und mittels einer Mutter 8 gesicherte Spindel 8, die in die Führungsstange 6 hineinragt und mit dieser zusammen einen zweiten spaltförmigen Ringraum 9 bildet.

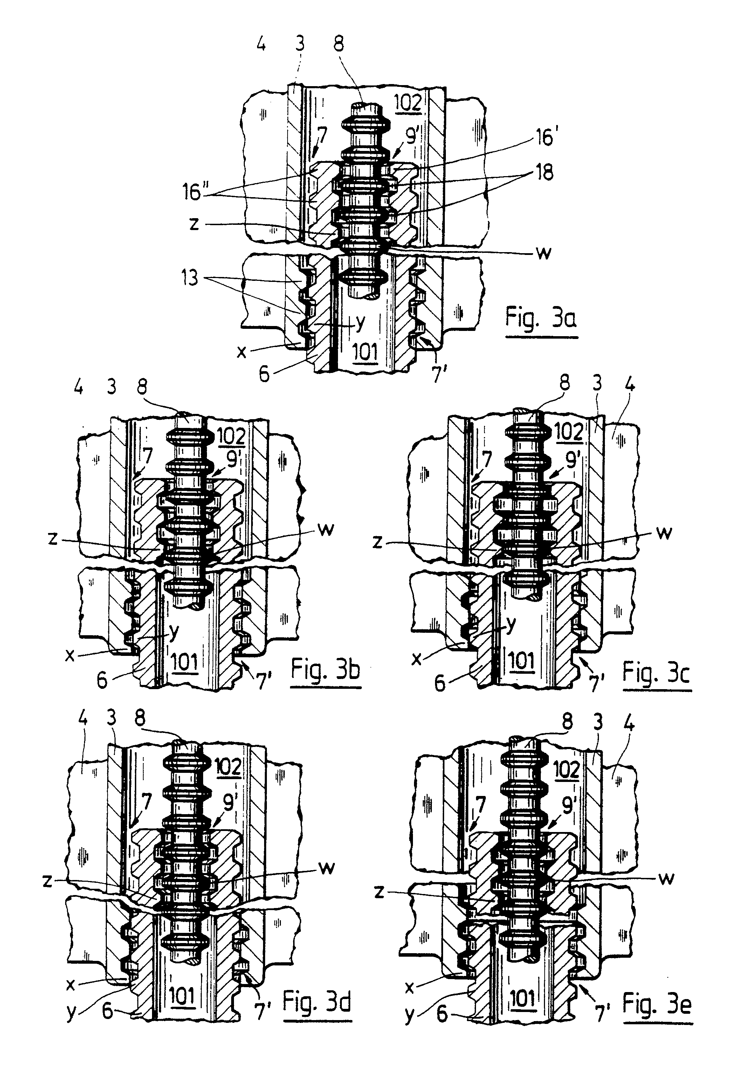

Am unteren Ende der Innenfläche des Steuerstabes 3 sind drei in den ersten spaltförmigen Ringraum 7 hineinragende, senkrecht zur Längsachse der Führungsstange 6 angeordnete, kreisförmige Rippen 13 vorgesehen. In gleicher Weise sind am oberen Ende der Innenfläche der Führungsstange 6 drei in den zweiten spaltförmigen Ringraum 9 hineinragende, senkrecht zur Längsachse der Führungsstange angeordnete, kreisförmige Rippen 16′ eingearbeitet. Entlang der ganzen Aussenfläche der Führungsstange 6 sind Rippen 16″ und entlang der ganzen Länge der Spindel 8 Rippen 18 vorhanden. Die Rippen 13, 16′, 16″, 18 sind gleichmässig verteilt, so dass der vertikale Abstand a zwischen benachbarten, gegeneinander fest angeordneten Rippen 13, 16′, 16″,18 überall gleich ist. Die Rippen 13 des Steuerstabes 3 und die Rippen 16" auf der Aussenfläche der Führungsstange 6 bilden zusammen eine erste Drosselstelle 7′, während die Rippen 16′ auf der Innenfläche der Führungsstange 6 und die Rippen 18 an der Spindel 8 zusammen eine zweite Drosselstelle 9′ bilden. Unterhalb der zweiten Drosselstelle 9′ ist im Innern der Führungsstange 6 ein erster Druckraum 101 vorhanden, und zwischen der ersten und der zweiten Drosselstelle 7′ bzw. 9′ ist ein zweiter Druckraum 102 vorgesehen. In einer stabilen Gleichgewichtslage des Steuerstabes 3 fluchtet in der ersten Drosselstelle 7 die untere Flanke jeder Rippe 13 des Steuerstabes 3 praktisch mit der oberen Flanke einer Rippen 16″ auf der Aussenfläche der Führungsstange 6, und die Rippen 16′ auf der Innenfläche der Führungsstange 6 befinden sich jeweils etwa auf der Höhe der Mitte zwischen zwei benachbarten Rippen 18 der Spindel 8. Daher wirkt in der stabilen Gleichgewichtslage (Fig. 1 und 3a) die erste Drosselstelle 7′ stark drosselnd, während die zweite Drosselstelle 9′ ihre geringste Drosselwirkung aufweist, so dass der im zweiten Druckraum 102 herrschende, den Steuerstab 3 tragende Druck aufrechterhalten wird.

In der Hauptsteuerleitung 21 sind Steuermittel 20 angebracht, bestehend aus einem stromunterhalb der Pumpe 5 angeordneten Steuerventil 25, einem handbetätigten, auf das Steuerventil 25 schnellwirkenden Ventilantrieb 26 und einer Zählvorrichtung 27, die bei jeder Betätigung des Steuerventils 25 vom Ventilantrieb 26 betätigt wird. Um das Steuerventil 25 führt eine Bypassleitung 22 herum, die eine Drosselstelle 23 aufweist.

Die Anlage weist ferner eine an der Hauptsteuerleitung 21 angeschlossene Drucküberwachungsvorrichtung 30 auf, die einen Druckmesser 31, eine Signalleitung 32 und eine Ventilsteuerung 33 umfasst und auf ein rasch wirkendes Notventil 34 vom Auf/Zu-Typ in einer an der Pumpe 5 angeordneten Rückfuhrleitung 35 wirkt. Die Ventilsteuerung 33 ist dabei so eingestellt, dass bei einem vom Druckmesser 31 gemessenen Druck, der ausserhalb eines vorgegebenen Druckbereiches liegt, unverzüglich das Notventil 34 geöffnet wird. Die dann von der Pumpe 5 geförderte Wassermenge wird grösstenteils über die Rückfuhrleitung 35 rezirkuliert, wobei der Druck im Innern der Führungsstangen 6 so tief fällt, dass die Steuerstäbe 3 unverzüglich in ihre unterste Sicherheitsstellung fahren.

Die Ventilsteuerung 33 ist über eine Steuerleitung 36 mit dem Ventilantrieb 26 so verbunden, dass bei jeder Betätigung des Ventilantriebes 26 die Ventilsteuerung 33 während einer für den Ablauf des Druckstosses optimalen Zeit ausgeschaltet ist.

Vorzugsweise wird der Ventilantrieb 26 durch Knopfdruck betätigt, wobei mittels eines in Fig. 1 nicht gezeigten Zeitgliedes eine konstante, vom Knopfdruck unabhängige Betätigungsdauer des Steuerventils 25 bewirkt wird.

Die beschriebene Anlage funktioniert wie folgt:

Im Normalbetrieb fördert die Pumpe 5 Wasser vom Innern des Druckbehälters 1 über die Hauptsteuerleitung 21, die Steuerleitungen 21', die Kanäle 14 und die Druckkammern 15 in den jeweiligen ersten Druckraum 101. Dabei ist das Steuerventil 25 für die erforderliche Wassermenge entsprechend eingestellt, und das Notventil 34 ist geschlossen. Aus dem ersten Druckraum 101 strömt das Wasser über den zweiten spaltförmigen Ringraum 9 und durch die zweite Drosselstelle 9' in den zweiten Druckraum 102, von wo aus es über den ersten spaltförmigen Ringraum 7 und die erste Drosselstelle 7 ins Innere des Druckbehälters 1 zurückgelangt. In diesem Betriebszustand befindet sich der Steuerstab 3 in einer stabilen Gleichgewichtslage, in der - infolge der Anordnung der Rippen 13, 16', 16" und 18 - die zweite Drosselstelle 9' ihre maximale Wasserdurchlässigkeit, d.h. geringste Drosselwirkung, und die erste Drosselstelle 7' eine starke Drosselwirkung aufweisen, wobei der von der Pumpe 5 erzeugte Druck mit nur unwesentlichen Verlusten auf den zweiten Druckraum 102 übertragen wird. Der Steuerstab 3 ruht daher auf dem unter Druck stehenden Wasser in einer stabilen Lage. Bei einer allmählichen Druckzunahme des Wassers oder bei einer entsprechenden äusseren Krafteinwirkung auf den Steuerstab 3 wird dieser ein wenig nach oben verschoben. Dabei wächst der Strömungswiderstand in der zweiten Drosselstelle 9' und zugleich sinkt der Widerstand in der ersten Drosselstelle 7', so dass Wasser aus dem zweiten Druckraum 102 in das Innere des Druckgefässes 1 strömt und der den Steuerstab 3 tragende Druck sinkt; der Steuerstab geht wieder in seine stabile Gleichgewichtslage zurück. Wirkt dagegen eine allmähliche Druckabnahme oder eine entsprechende äussere Kraft auf den Steuerstab 3, so wird dieser ein wenig nach unten bewegt. Es steigt dadurch die Drosselwirkung der zweiten Drosselstelle 9' und die Drosselwirkung der ersten Drosselstelle 7' bleibt bestehen. Das Wasser im zweiten Druckraum 102 wird etwas gestaut und der Druck darin steigt, was ein Zurückverschieben des Steuerstabes 3 nach oben in seine stabile Gleichgewichtslage bewirkt. Infolge der Inkompressibilität des Wassers treten die eben beschriebenen Wirkungen sehr rasch ein und die Verschiebungen des Steuerstabes 3 sind unbedeutend.

Soll nun der Steuerstab 3 über eine Stufe gehoben werden, so wird das Steuerventil 25 kurzzeitig durch Betätigen des Ventilantriebes 26 voll geöffnet. Die dadurch kurzzeitig vergrösserte Wassermenge verursacht über die Steuerleitungen 21', die Kanäle 14 und die Druckkammern 15 jeweils in dem ersten Druckraum 101 einen positiven Druckstoss. Dieser ist so gross, dass die oben beschriebene stabilisierende Wirkung der ersten und der zweiten Drosselstelle 7 bzw. 9' überwunden wird und der Steuerstab 3 gemäss Fig. 3a bis 3e um eine Verschiebungsstufe nach oben verschoben wird. Dabei bewegt sich der Steuerstab 3 aus seiner Gleichgewichtslage (Fig. 3a) zunächst soweit heraus, dass in der ersten Drosselstelle 7 jede Rippe 13 (x) des Steuerstabes 3 etwa die Mitte zwischen jeweils zwei Rippen 16" (y) auf der Aussenfläche der Führungsstange 6 erreicht (Fig. 3b), wobei in dieser Drosselstelle die Drosselwirkung zurückgeht. Zugleich wandern in der zweiten Drosselstelle 9' die Rippen 18 (w) aus der Mittenlage gegen die Rippen 16' (z), wodurch sich hier eine verstärkte Drosselung einstellt (Fig. 3b). Dadurch sinkt der Druck innerhalb des zweiten Druckraumes 102, was auf den Steuerstab 3 im bremsenden Sinne wirkt. Trotz der Bremswirkung bewegt sich der Steuerstab 3 infolge Trägheit weiter nach oben in die Stellung nach Fig. 3c, in der sowohl die Rippen 13 (x), 16" (y) der ersten Drosselstelle 7' als auch die Rippen 16' (z), 18 (w) der zweiten Drosselstelle 9' grösstmögliche Drosselwirkung erreichen. Der relativ tiefe Druck innerhalb des zweiten Druckraumes 102 bleibt jedoch weiterhin niedrig und wirkt daher immer noch bremsend auf den Steuerstab 3. Durch die Bemessung und die Anordnung der Rippen 13, 16', 16" und 18 verliert bei einer weiteren Verschiebung des Steuerstabes 3 nach oben zuerst die zweite Drosselstelle 9' ihre stärkste Drosselwirkung und später auch die erste Drosselstelle 7' (Fig. 3d). Bevor die erste Drosselstelle 7' ihre stärkste Drosselwirkung verliert, gelangt Druckmittel höheren Druckes vom ersten Druckraum 101 in den zweiten Druckraum 102, so dass ein Rückfallen des Steuerstabes 3 in seine frühere Position verhindert wird. Dies geschieht aber nur während einer extrem kurzen Zeitspanne. Danach kommt die erste Drosselstelle 7' wieder in eine Stellung, in der sie ihre kleinste Drosselwirkung aufweist (Fig. 3e). Der in eine etwas zu hohe Lage geratene Steuerstab 3 wird nun definitiv gebremst und fällt etwas zurück in die neue, um eine Verschiebungsstufe höhere Gleichgewichtslage. Diese entspricht der nach Fig. 3a, jedoch liegen die Rippen 13 und 18 relativ zu den Rippen 16" bzw. 16' um eine Stufe höher als vor dem Druckstoss, wie dies aus den Fig. 3a bis 3e an den mit x, y, z und w bezeichneten Rippen zu erkennen ist. Das Verhalten der Steuerstäbe wird in erster Linie durch ihre Form, ihr Eigengewicht, die Grösse und Dauer des Druckstosses, die Form der Rippen 13, 16 , 16", 18 und die in der Anlage vorhandenen Drücke beeinflusst.

Entsprechend verhält sich der Steuerstab 3 bei einer Verschiebung nach unten, wobei in diesem Fall ein negativer Druckstoss durch ein kurzzeitiges Schliessen des Steuerventils 25 erzeugt wird Dabei bewirkt die Umleitung 22 mit der Drosselstelle 23 eine Aufrechterhaltung eines reduzierten Wasserstromes, um ein unkontrolliertes Hinunterfahren des Steuerstabes 3 in seine tiefste Stellung zu verhindern.

Bei jeder Betätigung des Ventilantriebes 26 wird auch die Zählvorrichtung 27 betätigt, die den entsprechenden Druckstoss zählt. Da jedem Druckstoss eine Verschiebung des Steuerstabes 3 um eine Verschiebungsstufe folgt, wird durch einfaches Zählen der positiven und der negativen Druckstösse die jeweilige Lage der Steuerstäbe festgestellt. Der Zähler 27 kann mit einem Register verbunden werden, das direkt die Position der Steuerstäbe angibt. Es kann auch zweckmässig sein, über ein UND-Glied die Signale aus dem Ventilantrieb 26 zusammen mit den Signalen aus dem Druckmesser 31 auf die Zählvorrichtung 27 wirken zu lassen, um nur die tatsächlich erfolgten Druckstösse zu zählen. Es ist ferner notwendig, die Steuermittel 20 so zu gestalten, dass bei jeder Betätigung des Notventils 34 die Zählvorrichtung automatisch auf Null gestellt wird.

Gemäss Fig. 4 ist an der zum ersten Druckraum 101 führenden Steuerleitung 21' ein Druckentlastungsorgan 50 angeschlossen, das zwecks Berücksichtigung erhöhter Sicherheitsbedingungen vorgesehen ist. Ein solches Druckentlastungsorgan ist für jeden Steuerstab 3 vorgesehen. Gemäss Fig. 5a weist das Druckentlastungsorgan 50 einen am oberen Ende geschlossenen Zylinder 51 auf, der an seinem unteren Ende über einen Rohrstutzen 52 mit der Steuerleitung 21' in Verbindung steht. Im Zylinder 51 befindet sich ein Kolben 53, der im Zylinder auf- und abwärts gleiten kann und ausserhalb seines Zentrums axiale Durchgangsbohrungen 54 aufweist. Am unteren Ende des Kolbens 53 ist dieser mit einem koaxialen Drosselstift 55 versehen, dessen zylindrische Länge dem Abstand "a" zwischen zwei Gleichgewichtslagen des Steuerstabes 3 entspricht. Der Drosselstift ist von einer im Boden 56 des Zylinders 51 koaxial angebrachten Einschnürung 57 umgeben, die die Verbindung zwischen dem Rohrstutzen 52 und dem Innenraum des Zylinders 51 herstellt. Das obere Ende der Einschnürung 57 ist von radialen Rippen 58 umgeben, auf denen der Kolben 53 ruht, wenn der Steuerstab 3 eine Gleichgewichtslage innehat. Seitlich neben der Einschnürung 57 ist im Zylinderboden 56 ein Kanal 59 vorgesehen, der den Innenraum des Zylinders 51 mit dem Innern des Druckgefässes verbindet.

Das Gewicht des Kolbens 53 ist so bemessen, dass es den in der Einschnürung 57 bei Gleichgewichtslage des Steuerstabes 3 herrschenden hydraulischen Druck etwas überwiegt. Anderseits ist das Gewicht kleiner als der hydraulische Druck, der zum Anheben des Steuerstabes 3 aus seiner Gleichgewichtslage in die nächsthöhere Stufe notwendig ist.

Im Fall eines durch Öffnen des Steuerventils 25 normal erzeugten positiven Druckstosses steigt also der Druck in der Steuerleitung 21' und bewirkt, dass der Steuerstab 3 und der Kolben 53 sich im wesentlichen gleichzeitig nach oben bewegen. Sobald der Drosselstift 55 die Einschnürung 57 verlässt (Fig. 5b), fällt der Druck in der Steuerleitung 21 auf das Niveau, bei dem der Kolben 53 von den Rippen 58 abgehoben hat. Dadurch erfolgt sesbttätig eine Druckentlastung in der Steuerleitung 21', und zwar unabhängig davon, ob das Steuerventil 25 gleichzeitig oder mit einer gewissen Verspätung schliesst oder überhaupt nicht schliesst. Die Druckentlastung dauert solange, bis der Druck in der Steuerleitung 21' unterhalb des Anhebedruckniveaus des Kolbens 53 gefallen ist. Auch wenn das Steuerventil 25 normal schliesst, fällt der Druck in der Steuerleitung 21' auf den normalerweise bei Gleichgewichtslage herrschenden Druck, so dass der Kolben 53 ebenfalls in seine stabile unterste Lage zurückfällt, die in Fig. 5a gezeigt ist.

Mit dem Druckentlastungsorgan 50 wird also erreicht, dass auch dann, wenn das Steuerventil 25 nicht normal arbeitet, z.B. zu spät schliesst oder hängen bleibt und somit überhaupt nicht schliesst, der Steuerstab immer eine Gleichgewichtslage einnimmt.

Es ist ferner möglich, je ein weiteres Druckentlastungsorgan unterhalb des ersten Druckraumes 101 und/oder am oberen Ende des Steuerstabes anzubringen.

## Patentansprüche

1. Anlage mit einem nuklearen Reaktor, insbesondere Heizreaktor, der ein Druckgefäss (1) aufweist, in dem ein Kühlmedium sowie ein Reaktorkern enthalten sind, der im wesentlichen aus geraden, vertikalen, kanalartigen, Spaltmaterial enthaltenden Brennelementen (2) und dazwischen angeordneten, rohrförmigen vertikal bewegbaren Steuerstäben (3) besteht, an denen Absorberstäbe (4) befestigt sind, wobei Fördermittel (5) vorhanden sind, die zum Bewegen der Steuerstäbe (3) Kühlmedium aus dem Druckgefäss (1) unter Druck setzen, wobei ferner jeder Steuerstab (3) unter Freilassung eines ersten spaltförmigen Ringraumes (7) eine ebenfalls rohrförmige, relativ zu den Brennelementen (2) unbewegliche Führungsstange (6) umgibt, deren Inneres, einen ersten Druckraum (101) bildend, mit der Druckseite der Fördermittel (5) verbunden ist, und wobei im ersten spaltförmigen Ringraum (7) mindestens eine erste Drosselstelle (7') vorgesehen ist sowie das obere Ende des Steuerstabes (3) geschlossen ist, so dass das von den Fördermitteln (5) geförderte Kühlmedium vom ersten Druckraum (101) durch die erste Drosselstelle (7') im ersten spaltförmigen Ringraum (7) in das Druckgefäss (1) zurückströmt, **dadurch gekennzeichnet,** dass am oberen Ende eines jeden Steuerstabes (3) eine ins Innere der Führungsstange (6) hineinragende, mit dieser zusammen einen zweiten spaltförmigen Ringraum (9) bildende, vertikale Spindel (8) befestigt ist, dass im zweiten spaltförmigen Ringraum (9) mindestens eine zweite Drosselstelle (9') vorgesehen ist, wobei zwischen dieser und der ersten Drosselstelle (7') mindestens ein zweiter Druckraum (102) gebildet ist, und dass Steuermittel (20) vorhanden sind, mit denen bei Bedarf Druckstösse im Kühlmedium im ersten Druckraum (101) erzeugbar sind.

2. Anlage nach Anspruch 1, dadurch gekennzeichnet, dass die beiden Drosselstellen (7', 9') von jeweils in den spaltförmigen Ringraum (7 bzw. 9) hineinragenden, quer zur Längsachse der Führungsstange (6) angeordneten, gleichmässig in Längsrichtung verteilten Rippen (13, 16" bzw. 16', 18) auf der Innenfläche des Steuerstabes (3) und der Aussenfläche der Führungsstange (6) bzw. auf der Innenfläche der Führungsstange (6) und auf der Spindel (8) gebildet sind.

3. Anlage nach Anspruch 2, dadurch gekennzeichnet, dass der Abstand (a) zwischen benachbarten, gegeneinander fest angeordneten Rippen etwa 10 mm beträgt.

4. Anlage nach einem der Ansprüche 1 bis 3, dadurch gekennzeichnet, dass die Drosselstellen (7', 9') so ausgelegt sind, dass bei einer stabilen Gleichgewichtslage des Steuerstabes (3) die erste Drosselstelle (7') eine starke und die zweite Drosselstelle (9') eine geringe Drosselwirkung aufweist, und dass bei einer Verschiebung des Steuerstabes (3) aus der stabilen Gleichgewichtslage nach oben, die Drosselwirkung der ersten Drosselstelle (7') kleiner und diejenige der zweiten Drosselstelle (9') grösser wird, und bei einer Verschiebung aus der stabilen Gleichgewichtslage nach unten, die Drosselwirkung der ersten Drosselstelle (7') gross bleibt und diejenige der zweiten Drosselstelle (9') grösser wird.

5. Anlage nach einem der Ansprüche 1 bis 4, dadurch gekennzeichnet, dass die Steuermittel (20) eine Drucküberwachungsvorrichtung (30) enthalten, die an einer Hauptsteuerleitung (21) zwischen den Fördermitteln und einem Verteiler (41) angeschlossen ist, von dem soviele Steuerleitungen (21') ausgehen wie Steuerstäbe (3) vorhanden sind, und die bei Drücken, die ausserhalb eines vorgegebenen Druckbereiches liegen, unverzüglich das Hinunterfahren der Steuerstäbe (3) durch Druckabsenkung im ersten Druckraum (101) bewirkt.

6. Anlage nach Anspruch 5, dadurch gekennzeichnet, dass die Steuermittel (20) mit der Drucküberwachungsvorrichtung (30) so gekoppelt sind, dass bei einem Betätigen der Steuermittel (20) zur Erzeugung eines Druckstosses die Drucküberwachungsvorrichtung (30) während einer für den Ablauf des Druckstosses optimalen Zeit ausgeschaltet ist.

7. Anlage nach einem der Ansprüche 1 bis 6, dadurch gekennzeichnet, dass die Steuermittel (20) zur Erzeugung von stets gleichen Druckstössen ausgelegt sind und dass eine Zählvorrichtung (27) zum Zählen der Druckstösse vorgesehen ist.

8. Anlage nach einem der Ansprüche 1 bis 7, dadurch gekennzeichnet, dass jedem Steuerstab (3) mindestens ein Druckentlastungsorgan (50) zugeordnet ist, das mit dem ersten Druckraum (101) kommuniziert und das auf einen Druck eingestellt ist, der zwischen dem bei einer Gleichgewichtslage des Steuerstabes (3) im ersten Druckraum (101) herrschenden Druck und dem minimalen Druck liegt, der bei einem Anheben des Steuerstabes (3) in eine neue Gleichgewichtslage von den Fördermitteln (5) aufzubringen ist.

9. Anlage nach Anspruch 8, dadurch gekennzeichnet, dass das Druckentlastungsorgan (50) aus einem an den ersten Druckraum (101) angeschlossenen Zylinder (51) und einem darin vertikal gleitenden Kolben (53) besteht, der einen bei einer Gleichgewichtslage des Steuerstabes (3) in die Anschlussöffnung (57) des Zylinders (51) ragenden Drosselstift (55) aufweist, dessen Länge so bestimmt ist, dass bei einem positiven Druckstoss der Drosselstift (55) aus der Anschlussöffnung (57) zur gleichen Zeit austritt, zu der der zugehörige Steuerstab (3) die neue Gleichgewichtslage einnimmt.

## Claims

1. A plant with a nuclear reactor, more particularly a heating reactor, comprising a pressure vessel (1) containing a cooling medium and a reactor core consisting essentially of straight vertical fuel elements (2) in the form of ducts containing fissile material, with tubular vertically movable control rods (3) disposed therebetween, absorber rods (4) being secured to the control rods (3), conveying means (5) being provided which, in order to move the control rods (3), apply pressure to the cooling medium from the pressure vessel (1), each control rod (3) surrounding a likewise tubular guide rod (6) which is immovable relatively to the fuel elements (2), a first annular gap (7) being left between the control rod and the guide rod, the interior of the guide rod (6) being connected to the pressure side of the conveying means (5) so as to form a first pressure chamber (101), at least one first restriction point (7') being provided in the first annular gap (7) and the top end of the control rod (3) being closed so that the cooling medium conveyed by the conveying means (5) flows back from the first pressure chamber (101) through the first restriction point (7') in the first annular gap (7) into the pressure vessel (1), characterised in that a vertical spindle (8) projecting into the interior of the guide rod (6) and forming a second annular gap (9) therewith is secured to the top end of each control rod (3), In that at least one second restriction point (9') is provided in the second annular gap (9), at least one second pressure chamber (102) being formed between the second restriction point (9') and the first restriction point (7'), and in that control means (20) are provided whereby pressure surges can be produced as required in the cooling medium in the first pressure chamber (101).

2. A plant according to claim 1, characterised in that the two restriction points (7', 9') are each formed by ribs (13, 16'' and 16', 18) on the inner surface of the control rod (3) and the outer surface of the guide rod (6) and on the inner surface of the guide rod (6) and on the spindle (8), said ribs projecting into the annular gap (7; 9) and being disposed transversely of the longitudinal axis of the guide rod (6) and being uniformly distributed in the longitudinal direction.

3. A plant according to claim 2, characterised in that the distance (a) between adjacent ribs, which are disposed to be stationary relatively to one another, is about 10 mm.

4. A plant according to any one of claims 1 to 3, characterised in that the restriction points (7', 9') are so devised that given a stable position of equilibrium of the control rod (3) the first restriction point (7') has an intensive restriction effect while the second restriction point (9') has a low restriction effect, and in that in the event of the control rod (3) being shifted in the upward direction out of the stable position of equilibrium the restriction effect of the first restriction point (7') decreases and that of the second restriction point (9') increases, and in the event of a shift in the downward direction from the stable position of equilibrium the restriction effect of the first restriction point (7') remains high and that of the second restriction point (9') increases.

5. A plant according to any one of claims 1 to 4, characterised in that the control means (20) contain a pressure monitoring device (30) connected to a main control line (21) between the conveying means and a distributor (41), from which there radiate as many control lines (21') as there are control rods (3), and which, at pressures outside a predetermined pressure range, immediately causes the control rods (3) to be moved down by a pressure drop in the first pressure chamber (101).

6. A plant according to claim 5, characterised in that the control means (20) are so coupled to the pressure monitoring device (30) that in the event of actuation of the control means (20) to produce a pressure surge the pressure monitoring device (30) is switched off for an optimal time as regards the progress of the pressure surge.

7. A plant according to any one of claims 1 to 6, characterised in that the control means (20) are devised to generate pressure surges which are always identical and in that a counting device (27) is provided to count the pressure surges.

8. A plant according to any one of claims 1 to 7, characterised in that at least one pressure relief member (50) is associated with each control rod (3), communicates with the first pressure chamber (101), and is set to a pressure between the pressure in the first pressure chamber (101) when the control rod (3) is in a position of equilibrium and the minimal pressure to be applied by the conveying means (5) on lifting of the control rod (3) into a new position of equilibrium.

9. A plant according to claim 8, characterised in that the pressure relief member (50) consists of a cylinder (51) connected to the first pressure chamber (101), and a piston (53) sliding vertically in said cylinder (51) and having a restriction pin (55) which, when the control rod (3) is in the position of equilibrium, projects into the connecting port (57) of the cylinder (51), the length of said pin (55) being such that given a positive pressure surge the restriction pin (55) moves out of the connecting port (57) at the same time as the associated control rod (3) assumes the new position of equilibrium.

**Revendications**

1. Installation comprenant un réacteur nucléaire, en particulier un réacteur thermique qui comprend une cuve sous pression (1) qui renferme un fluide de refroidissement ainsi qu'un coeur de réacteur qui se compose essentiellement d'éléments verticaux rectilignes de combustible (2) en forme de canaux et contenant une matière fissile, ainsi que de barres tubulaires de commande (3) mobiles verticalement, disposées entre les éléments de combustible et auxquelles des barres d'absorption (4) sont fixées, ladite installation comprenant par ailleurs des organes de refoulement (5) qui mettent sous pression du fluide de refroidissement provenant de la cuve sous pression (1) pour le déplacement des barres de commande (3), chaque barre de commande (3) entourant par ailleurs une barre de guidage (6) également tubulaire, immobile par rapport aux éléments de combustible (2) et laissant subsister une première chambre annulaire (7) en forme de fente, l'intérieur de cette barre de guidage (6) communiquant avec le côté sous pression des organes de refoulement (5) en formant une première chambre sous pression (101) et au moins un premier lieu d'étranglement (7') étant prévu dans la première chambre annulaire en forme de fente (7), l'extrémité supérieure de la barre de commande (3) étant fermée de manière que le fluide de refroidissement refoulé par les organes correspondants (5) reflue de la première chambre sous pression (101) dans la cuve sous pression (1) en passant par le premier lieu d'étranglement (7') se trouvant dans la première chambre annulaire en forme de fente (7), installation caractérisée en ce qu'une tige verticale (8) fixée à l'extrémité supérieure de chaque barre de commande (3) et pénétrant à l'intérieur de la barre de guidage (6) forme avec cette dernière une seconde chambre annulaire en forme de fente (9), en ce qu'au moins un second lieu d'étranglement (9') est prévu dans la seconde chambre annulaire en forme de fente (9), au moins une seconde chambre sous pression (102) étant formée entre ce second lieu d'étranglement (9') et le premier (7') et des organes de commande (20) sont prévus, à l'aide desquels des coups de bélier peuvent être produits si nécessaire dans le fluide de refroidissement se trouvant dans la première chambre sous pression (101).

2. Installation selon la revendication 1, caractérisée en ce que chacun des deux lieux d'étranglement (7', 9') est formé de nervures (13, 16" ainsi que 16', 18) qui pénètrent dans la chambre annulaire en forme de fente (7 ainsi que 9), qui sont disposées transversalement par rapport à l'axe longitudinal de la barre de guidage (6), qui sont réparties régulièrement dans la direction de la longueur et qui sont réalisées sur la surface intérieure de la barre de commande (3) et la surface extérieure de la barre de guidage (6) ainsi que sur la surface intérieure de la barre de guidage (6) et sur la tige (8).

3. Installation selon la revendication 2, caractérisée en ce que la distance (a) séparant des nervures voisines disposées en position fixe les unes par rapport aux autres est d'environ 10 mm.

4. Installation selon l'une des revendications 1 à 3, caractérisée en ce que les lieux d'étranglement (7', 9') sont conçus de manière que, lorsque la barre de commande (3) est en position stable d'équilibre, le premier lieu d'étranglement (7') exerce un fort effet de freinage de la circulation et le second lieu d'étranglement (9') en exerce un faible, et en ce que, lors d'un déplacement de la barre de commande (3) de la position stable d'équilibre vers le haut, l'effet de freinage de la circulation produit par le premier lieu d'étranglement (7') diminue et celui que produit le second lieu d'étranglement (9') augmente et, en cas de déplacement de la position stable d'équilibre vers le bas, l'effet de freinage de la circulation produit par le premier lieu d'étranglement (7') demeure grand et celui que produit le second lieu d'étranglement (9') augmente.

5. Installation selon l'une des revendications 1 à 4, caractérisée en ce que les organes de commande (20) comprennent un dispositif de contrôle de la pression (30) qui est raccordé à une canalisation principale de commande (21) montée entre les organes de refoulement et un distributeur (41) duquel partent autant de canalisations de commande (21') qu'il existe de barres de commande (3) et, en cas de présence de pressions qui sont à l'extérieur d'une plage prescrite, ledit dispositif de contrôle de la pression (30) provoque immédiatement la descente des barres de commande (3) par chute de la pression dans la première chambre sous pression (101).

6. Installation selon la revendication 5, caractérisée en ce que les organes de commande (20) sont couplés avec le dispositif de contrôle de la pression (30) de manière qu'en cas d'actionnement des organes de commande (20) afin de produire un coup de bélier, le dispositif de contrôle de la pression (30) demeure hors service pendant un temps optimal pour la décharge du coup de bélier.

7. Installation selon l'une des revendications 1 à 6, caractérisée en ce que les organes de commande (20) sont conçus pour produire des coups de bélier toujours identiques et en ce qu'un dispositif (27) de comptage des coups de bélier est prévu.

8. Installation selon l'une des revendications 1 à 7, caractérisée en ce qu'au moins un organe déprimogène (50) affecté à chaque barre de commande (3) et communiquant avec la première chambre sous pression (101) est réglé à une pression qui est comprise entre la pression régnant dans la première chambre sous pression (101) lorsque la barre de commande (3) est en position d'équilibre et la pression minimale que les organes de refoulement (5) doivent fournir pour un soulèvement de la barre de commande (3) à une nouvelle position d'équilibre.

9. Installation selon la revendication 8, caractérisée en ce que l'organe déprimogène (50) se compose d'un cylindre (51) raccordé à la première chambre sous pression (101) et d'un piston (53) coulissant verticalement dans ce dernier et comportant une broche d'étranglement (55) pénétrant dans l'orifice (57) de raccord du cylindre (51) lorsque la barre de commande (3) est en position d'équilibre, la longueur de ladite broche d'étranglement (55) étant déterminée de manière qu'en présence d'un coup de bélier positif, cette broche (55) sorte de l'orifice de raccord (57) à l'instant même auquel la barre de commande correspondante (3) prend la nouvelle position d'équilibre.

Fig. 1

Fig. 2

10

Fig. 3a

Fig. 3b

Fig. 3c

Fig. 3d

Fig. 3e

Fig. 4

Fig. 5a

Fig. 5b